# EUROPÄISCHE PATENTSCHRIFT

(11) **EP 1 999 085 B1**
(45) Veröffentlichungstag und Bekanntmachung des Hinweises auf die Patenterteilung: **30.06.2010**
(21) Anmeldenummer: 08709216.9
(22) Anmeldetag: 26.02.2008
(51) Int. Cl.: C04B 35/04

(54) **FEUERFESTER KOHLENSTOFFGEBUNDENER MAGNESIASTEIN SOWIE VERFAHREN ZU SEINER HERSTELLUNG**
FIREPROOF CARBON-BONDED MAGNESIA BRICK AND METHOD FOR THE PRODUCTION THEREOF
BRIQUE DE MAGNÉSIE RÉFRACTAIRE LIÉE AU CARBONE, ET SON PROCÉDÉ DE FABRICATION

(30) Priorität: 07.03.2007 DE 102007011133
(43) Veröffentlichungstag der Anmeldung: 10.12.2008
(73) Patentinhaber: Refratechnik Holding GmbH, 85737 Ismaning (DE)
(72) Erfinder: JANSEN, Helge, 37133 Friedland (DE)
(74) Vertreter: Solf, Alexander
(86) Internationale Anmeldenummer: PCT/EP2008/052312
(87) Internationale Veröffentlichungsnummer: WO 2008/107343

(56) Entgegenhaltungen:
- WO-A-91/14661
- DE-A1- 2 201 541
- GB-A- 1 071 536
- JP-A- 5 004 861
- JP-A- 5 330 904
- US-A- 5 262 367
- KANNO K ET AL: "Mesophase pitch and phenolic resin blends as binders for magnesia-graphite bricks" CARBON, Bd. 37, Nr. 2, Februar 1999 (1999-02), Seiten 195-201, XP004481369 ISSN: 0008-6223
- C.G. ANEZIRIS ET. AL.: "Magnesia- Carbon-Bricks- A high-duty Refr. Material" INTERCERAM. REFRACTORIES MANUAL 2003, 2003, Seiten 22-27, XP002477891
- GERALD ROUTSCHKA: "Pocket Manual REFRACTORY MATERIALS" 1997, VULKAN-VERLAG ESSEN , ESSEN , XP002477892 Seite 139 bis 152;
- MÖRTL G. ET AL: 'Entwicklung und derzeitiger Stand der feuerfesten Zustellung von Sauerstoffblaskonvertern' BHM. BERG UND HUETTENMAENNISCHE MONATSHEFTE, SPRINGER, VIENNA, AU Bd. 137, Nr. 5, 01 Januar 1992, Seiten 196 - 203, XP009121755 ISSN: 0005-8912

## Beschreibung

Die Erfindung betrifft einen feuerfesten kohlenstoffgebundenen Magnesiastein sowie ein Verfahren zu seiner Herstellung.

Ein Stein im Sinne der Erfindung ist ein geformter Körper. Magnesia ist hauptsächlich Sintermagnesia oder Schmelzmagnesia mit der Hauptmineralphase Periklas (MgO), hergestellt z. B. durch Sintern oder Schmelzen von Magnesit (MgCO₃) oder aus Seewasser oder Solen gewonnenem Mg(OH)₃.

Bekannt sind gebrannte kohlenstoffhaltige Magnesiasteine. Diese Steine werden durch Mischen von klassierten Magnesiagranulaten und -mehlen mit einem eine Manipulationsfestigkeit gewährleistenden Bindemittel und Pressen sowie Brennen bei 1500 bis 1800° C hergestellt. Anschließend werden die gebrannten Steine unter Vakuum bei 150 bis 200° C mit Pech getränkt. Aufgrund einer Pyrolyse im Einsatz der Steine entstehen aus dem Pech Kohlenstoffpakete, die die Infiltration von z.B. Schlackenbestandteilen oder Gasen behindern. Die innere Bindung der Steine resultiert aus beim Brennen entstehenden Sinterbrücken zwischen den Magnesiakörnern. Erreichbar ist bei diesen Steinen ein Restkohlenstoffgehalt von etwa 2 Gew.-%.

Bekannt sind zudem ungebrannte, kohlenstoffgebundene Magnesiasteine, die hauptsächlich in der Stahlindustrie in Stahlerzeugungsaggregaten als Auskleidungen verwendet werden. Diese Steine werden hergestellt, indem klassierte Magnesiagranulate und - mehle mit Pech als Bindemittel bei 100 bis 200° C gemischt und warm gepresst werden. Anschließend erfolgt ein Tempern bei 250 bis 350°C, wobei aus dem Pech eine Kohlenstoffbindung in Form eines Koksgerüsts resultiert. Nachteilig ist, dass nach dem Einbau der Steine und während des Aufheizens im Stahlerzeugungsaggregat unverbrannte, gesundheitsschädliche Kohlenwasserstoffe freigesetzt werden können und eine unerwünschte Druckerweichung der Steine auftritt.

Zur Vermeidung dieser Nachteile und zur Vermeidung der energiereichen Warmverpressung werden als Bindemittel Kunstharze in Form von flüssigen Phenolresolen oder Phenol-Novolaklösungen verwendet und das Pressen kalt bei Raumtemperaturen unter Verwendung eines Härters oder bei Temperaturen zwischen Raumtemperatur und unter 100° C warm durchgeführt. Anschließend erfolgt eine Härtung bei 120 bis 200° C, wobei durch Vernetzung aus dem Harz ein unschmelzbares Resitgitter gebildet wird, das ebenfalls eine Kohlenstoffbindung bewirkt.

Die Kohlenstoffbindung, die nach der Pyrolyse bzw. dem Tempern eine Manipulationsfestigkeit der Steine gewährleistet, bleibt auch im Einsatz bei hohen Temperaturen erhalten. Neben der Kohlenstoffbindung bewirkt der Kohlenstoff, der die Zwickel zwischen den Magnesiakörnern weitgehend ausfüllt, zudem eine drastische Infiltrationsbehinderung bei der Beaufschlagung mit Schlacken und Gasen.

Des Weiteren sind Magnesiacarbonsteine bekannt. Dem Versatz zur Herstellung dieser Steine wird neben dem die Kohlenstoffbindung bewirkenden Bindemittel Graphit beigemengt, wodurch ein höherer Kohlenstoffgehalt in den Steinen und damit verbunden eine erhöhte Infiltrationsbehinderung bewirkt werden kann. Als Bindemittel wird Pech oder Kunstharz verwendet.

Für die Kohlenstoffbindung ist man bestrebt, durch Pyrolyse eine möglichst weitgehende Graphitisierung des Kohlenstoffs zu bewirken. Dies gelingt mit, Pech besser als mit Kunstharz. Durch die Verwendung von Graphitisierungshilfsmitteln kann die Graphitisierung von Kunstharz erheblich verbessert werden (EP 1 280 743 B1).

Der Kohlenstoff gewährleistet hauptsächlich die Bindung der ungebrannten Steine und eine Verschleißminderung durch Behinderung der Infiltration. Zudem werden insbesondere die Temperaturwechselbeständigkeit sowie die Wärmeleitfähigkeit erhöht und die Wärmedehnung erniedrigt.

Die Steinbindung ergibt sich im wesentlichen aus der Adhäsion zwischen dem Koksgerüst des Bindemittels und den Magnesiakörnern sowie insbesondere durch die Kohäsion innerhalb des Koksgerüsts. Bekannt in diesem Zusammenhang ist, dass im Betrieb bei hohen Temperaturen aufgrund von Redox-Reaktionen eine Gefügeschwächung im Innern der Steine auftreten kann. An diesen Redox-Reaktionen ist der Kohlenstoff beteiligt, der teilweise ausbrennt (Gerald Routschka, Taschenbuch "Feuerfeste Werkstoffe", 3. Aufl., Vulkan-Verlag, Essen, S. 172, Abs. 3 bis S. 173, Bild 2).

Aufgabe der Erfindung ist, kohlenstoffgebundene Magnesiasteine zu schaffen, bei denen die gefügeschwächenden Wirkungen der Redox-Reaktionen im Betrieb weitgehend vermieden wird.

Diese Aufgabe wird mit einem kohlenstoffgebundenen Magnesiastein gemäß Anspruch 1 und einem Verfahren gemäß Anspruch 10 gelöst.

Demgemäß ist Gegenstand der Erfindung ein feuerfester, keramisch gebrannter, kohlenstoffgebundener Magnesiastein, dessen Matrix über 70 Gew.-%, insbesondere von 80 bis 98 Gew.-% MgO-Körner aus Periklas sowie eine aus einer Verkokung resultierende Koksgerüst-Bindematrix Rest Graphit und/oder nebenphasen und Poren aufweist, wobei die MgO-Körner über eine Kohlenstoffbindung des Koksgerüsts fixiert sind und mindestens 30 %, insbesondere 50 bis 100 % der MgO-KÖrner jeweils mindestens eine aus dem keramischen Brand resultierende Sekundär-MgO- Sinterbrücke aufweist.

Der erfindungsgemäße Magnesiastein ist insbesondere auch gekennzeichnet durch einen Restkohlenstoffgehalt nach reduzierendem Glühen bei 1000° C (ASTM C 831-93) von mindestens 2, insbesondere von 5 bis 25 Gew.-%.

Der erfindungsgemäße Magnesiastein weist zweckmäßigerweise einen Flockengraphitgehalt in der Koksgerüstbindematrix von 2 bis 25, insbesondere von 5 bis 20 Gew.-% auf. Er zeichnet sich insbesondere auch dadurch aus, dass das Koksgerüst keine bei Temperaturerhöhungen Kohlenwasserstoffe freisetzende Substanzen aufweist. Die Nebenphasen des gebrannten Steins können z. B. Dicalciumsilikat, Calciumoxid, Dicalciumferrit oder Gangarten von Graphit in Mengen bis zu 5 Gew.-% enthalten. Die MgO-Körner weisen z. B. Korngrößen bis 8 mm, insbesondere zwischen 0 und 6 mm auf, wobei vorzugsweise folgende Kornverteilung der MgO-Körner vorliegt:

| **Korngröße (mm)** | **Anteil (Gew.-%)** |
|---|---|
| 2-4 | 25-40 |
| 1-2 15-30 | |
| 0,063-1 | 10-25 |
| < 0,063 | 15-30 |

Die Heißbiegefestigkeit bei 1500°C der erfindungsgemäßen Magnesiasteine liegt insbesondere zwischen 1,5 und 6, insbesondere zwischen 3 und 5 MPa und die Kaltdruckfestigkeit zwischen 10 und 40, insbesondere zwischen 20 und 35 MPa, sowie der E-Modul zwischen 1 und 15, insbesondere zwischen 4 und 10 MPa. Die Porosität beträgt zweckmäßigerweise 5 und 20, insbesondere 8 und 15 Vol.-%.

Der erfindungsgemäße Stein wird hergestellt, indem ein ungebrannter, getemperter ein Kohlenstoffbindemittel wie Pech oder Kunstharz enthaltender Magnesiastein gebrannt wird bei Temperaturen über 1200° C, wobei die Brennbedingungen, wie eine reduzierende Atmosphäre, die Brenndauer und die Temperaturführung so eingestellt werden, dass sich unter Einwirkung des vorhandenen Kohlenstoffs im Stein infolge von Redox-Reaktionen im gesamten Stein homogen verteilt dampfförmiges Magnesium aus Magnesia gemäß folgender Reaktion:

MgO + C -> Mg + CO

bildet, das dampfförmige Mg mit im Stein zur Verfügung stehenden Sauerstoff zu Sekundär-Magnesia oxidiert und sich unmittelbar an vorhandene Primär-Magnesiakörner anlagert. Überraschend ist, dass der Kohlenstoff dabei nicht oder nur unmerklich ausbrennt, vielmehr irgendwie im Stein verbleibt, wobei das Koksgerüst und damit die Kohlenstoffbindung nahezu unverändert erhalten bleibt und insofern keine bzw. keine erhebliche Gefügeschwächung eintritt.

Überraschend ist ferner, dass das Sekundär-MgO in beachtlichem Umfang Sinterbrücken zwischen vorhandenen Primär- Magnesiakörnern bildet, woraus neben der Kohlenstoffbindung eine zusätzliche keramische Bindung nach Art einer Sinterbindung resultiert. Diese Sinterbindung bildet sich offenbar bei Temperaturen, bei denen die MgO-Sinterung normalerweise in einem kohlenstofffreien MgO-Stein beim Brennen noch nicht erfolgen würde.

Die elektronenmikroskopischen Abbildungen der Bilder 1 bis 3 verdeutlichen die Erfindung.

Bild 1 zeigt die Matrix eines durch Sinterung gebundenen, kohlenstofffreien Magnesiasteins. Zu erkennen sind zahlreiche unterschiedlich große Magnesiakörner 1 als helle Felder, die über Sinterbrücken 2 miteinander keramisch gebunden sind. Die dunklen Felder 3 repräsentieren Poren.

Bild 2 zeigt die Matrix eines ungebrannten kohlenstoffgebundenen Magnesia-Carbonsteins. Die hellen Felder repräsentieren die MgO-Körner 1. in Form von großen bis feinen Körnern. Zwischen den Körnern befindet sich das Koksgerüst und Graphit als dunkle Matrixfelder. Zu erkennen ist, dass die Mg-Körner nicht über Sinterbrücken miteinander in Verbindung stehen, sondern durch den Kohlenstoff auf Abstand gehalten sind.

Bild 3 zeigt die Matrix eines erfindungsgemäßen, noch unbenutzten, kohlenstoffgebundenen, gebrannten Magnesia-Carbonsteins, hergestellt unter Verwendung von 10 Gew.-% Graphit und 3 Gew.-% Bindeharz sowie Tempern bei 200°C und Brennen bei 1500° C. Deutlich zu erkennen sind neben den hellen MgO-Körnern 1 die dunklen, den Kohlenstoff markierenden Felder. Die Primär-MgO-Körner 1 stehen über Sekundär-MgO-Sinterbrücken 2 miteinander in Verbindung, die sehr wahrscheinlich durch Anlagerung von aus der Mg-Gasphase entstandenem Sekundär-MgO an Primär-MgO-Körner entstanden sind.

Die Vorgänge bei der Matrixveränderung, die beim Brennen der erfindungsgemäßen MgO-Steine auftreten, sind noch nicht geklärt. Möglich ist, dass die als Sintersperre wirkenden, zwischen den Primär-MgO-Körnern liegenden Kohlenstoffteilchen verdrängt oder verlagert werden, oder der bei der Redox-Reaktion reagierende Kohlenstoff Wege für die Sekundär-MgO-Sinterbrücken frei macht und sich anschließend wieder an Kohlenstoff- und/oder MgO-Teilchen anlagert oder als CO-Gas entweicht.

Überraschende Tatsache ist, dass man bei Einhaltung von besonderen keramischen Brennbedingurigungen Sekundär-MgO-Sinterbrücken unterhalb von normalen Sintertemperaturen ohne Beeinträchtigung der Kohlenstoffbindung erzeugen kann, wobei die Sekundär-MgO-Sinterbrücken zumindest die Festigkeit des Steins erhöhen. Es sind mindestens 30 vorzugsweise zwischen 50 und 100 % der Primär-MgO-Körner versintert.

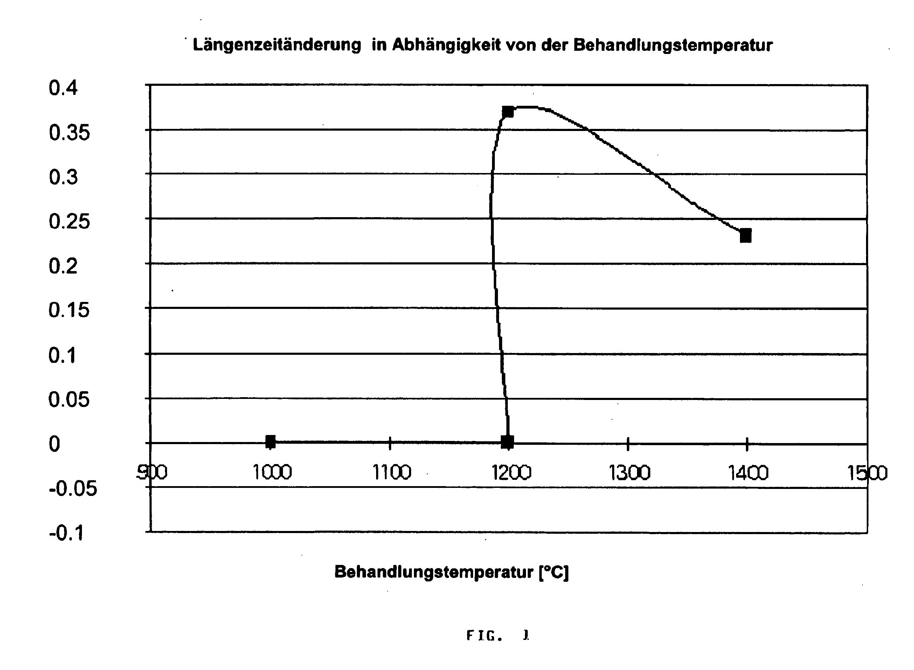

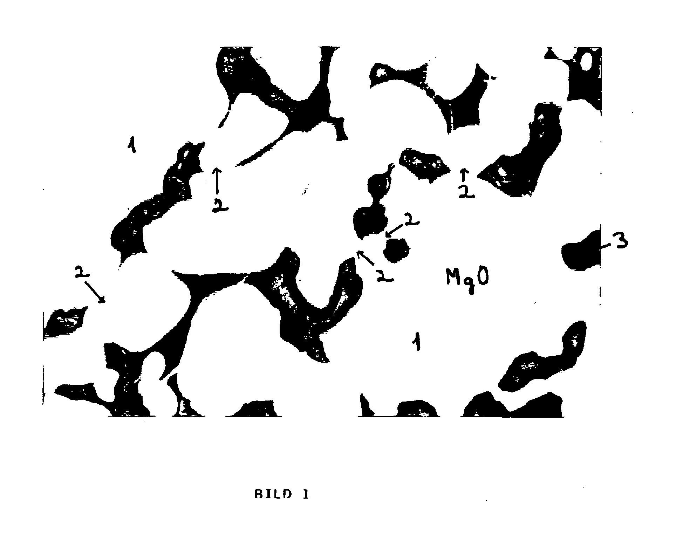

Wesentlich ist, dass die Brenntemperatur über 1200° C gewählt wird, wie aus Fig. 1 erkennbar ist. Das Diagramm in Fig. 1 zeigt die Längenänderung in % eines zunächst ungebrannten, kohlenstoffgebundenen Magnesia-Carbonsteins jeweils nach dem Brennen bei 1000, 1200 und 1400°C. Die Behandlung erfolgte nach dem Aufheizen jeweils 6 Stunden lang bei den angegebenen Temperaturen unter Sauerstoffausschluss.

Die Reaktion der Steine beginnt gemäß Fig. 1 signifikant bei 1200° C mit einem Ausdehnungssprung. Danach schrumpfen und kompaktieren die Steine infolge der Versinterung. Durch die Entstehung der neuen Sekundär-MgO-Sinterbindungen werden die Steine zusätzlich zur Kohlenstoffbindung verfestigt.

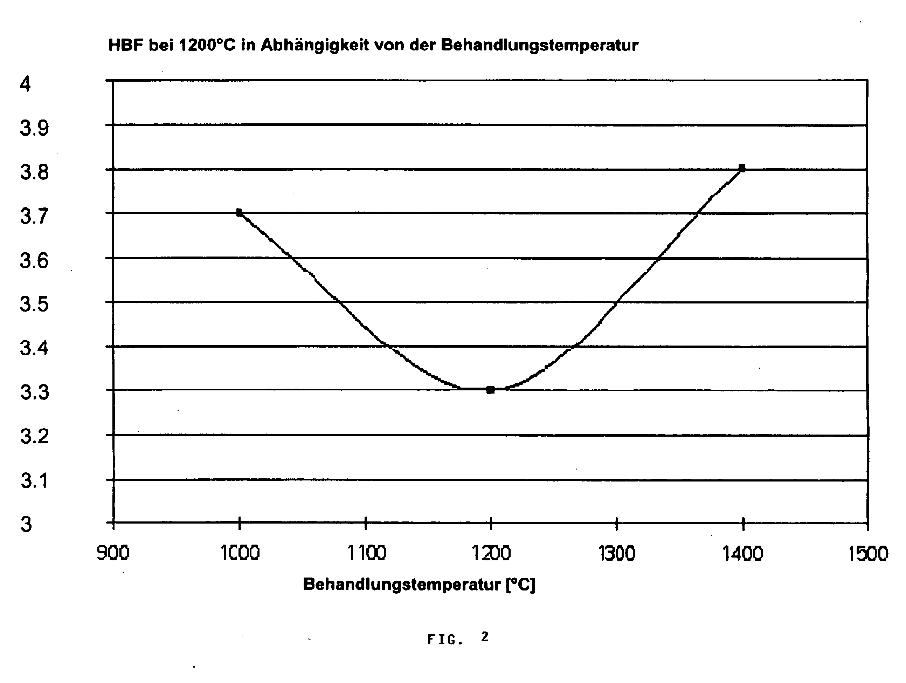

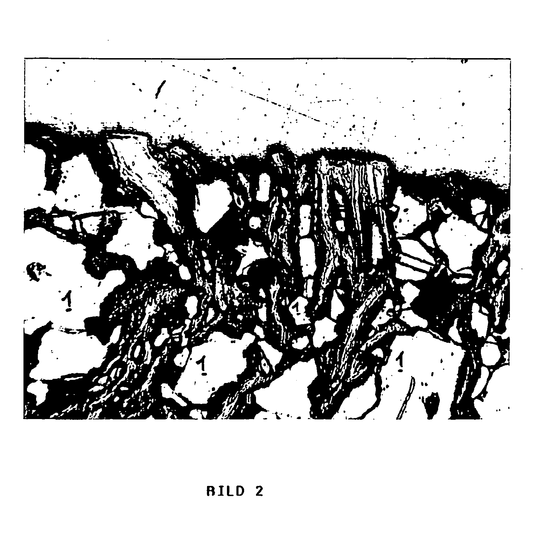

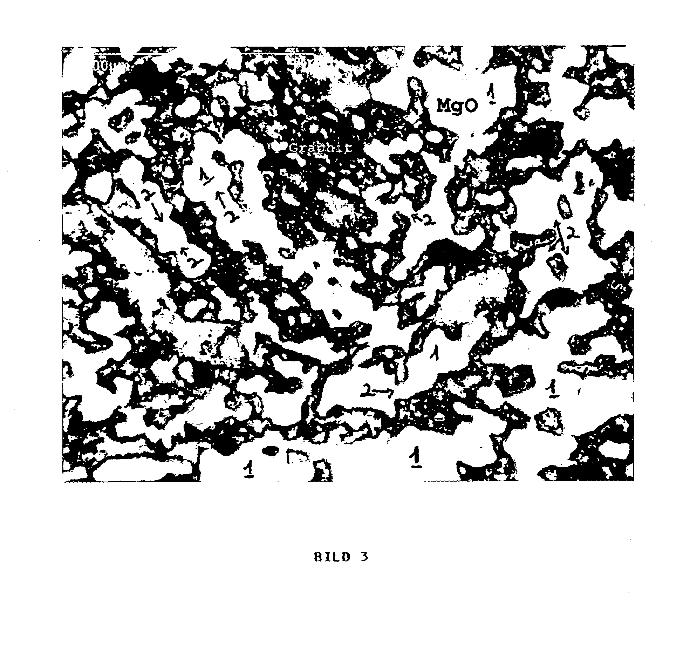

Fig. 2 zeigt die Verfestigung der gemäß Fig. 1 behandelten Steine anhand der Darstellung der die Steine im Einsatz charakterisierenden Heißbiegefestigkeit (HBF), die bei 1200° C ein Minimum und danach insbesondere infolge der Bildung der neuen Sekundär-MgO-Sinterbindungen drastisch ansteigt.

Für die Herstellung von erfindungsgemäßen gebrannten Steinen werden vorzugsweise folgende Versätze verwendet.

### 1. Pechgebundene Magnesiasteine

| | | |
|---|---|---|
| 83-95 | Ges.-% | Schmelzmagnesia (97.5 Gew.-% MgO-Gehalt) |
| 2-14 | Gew.-% | Flockengraphit |
| 2- 4 | Gew.-% | Pechbinder |

### 2. Harzgebundene, graphithaltige Magnesiasteine

| | | |
|---|---|---|
| 72-95 | Gew.-% | Schmelzmagnesia (97.5 Gew.-% MgO-Gehalt) |
| 2-25 | Ges.-% | Flockengraphit |
| 2- 4 | Gew.-% | Phenolharz |

Nach der Herstellung der Versätze werden Steinrohlinge durch Pressen geformt. Anschließend erfolgt ein Tempern der Rohlinge bei Temperaturen zwischen 150 und 250°C bei Verwendung von Phenolharz und 400 bis 600°C bei Verwendung von Pechbinder bis zur Verkokung des Bindemittels und Bildung einer Kohlenstoffbindung der Magnesiagranulatkörner. Das keramische Brennen dieser Form-körper, die aufgrund der Kohlenstoffbindung eine ausreichende Manipulationsfestigkeit aufweisen, erfolgt in reduzierender Atmosphäre über 1200°C bis mindestens 30 %, insbesondere 30 bis 100 % der Magnesiagranulatkörner mit jeweils mindestens einem anderen Magnesiagranulatkorn über eine Sekundär-MgO-Sinterbrücke versinter sind. Dabei ist vorteilhaft, wenn solange keramisch gebrannt wird, bis mehr als 50 %) Magnesiagranulatkörner vorlieben, die mehr als zwei Sekundär-MgO-Sinterbrücken aufweisen. Das Tempern und das keramische Brennen wird vorzugsweise in unmittelbarer Folge im selben Brennaggregat durchgeführt.

Die kohlenstoffgebundenen Magnesiasteine werden mit Aufheizgeschwindigkeiten von 0,5 bis 5, insbesondere von 2 bis 3°C/Minute bis auf 1200 bis 1500, insbesondere bis auf 1300 bis 1400°C aufgeheizt und bei der jeweiligen Temperatur 2 bis 10, insbesondere 5 bis 6 Stunden gebrannt und anschließend mit Abkühlgeschwindigkeiten zwischen 0,5 und 5, insbesondere zwischen 2 und 3°C/Minute abgekühlt.

Die Matrix der erfindungsgemäßen gebrannten kohlenstoffgebundenen Magnesiasteine besteht aus über 70, insbesondere 80 bis 95 Gew.-% Mg0-Körner 1; Rest jeweils Koksgerüst oder Koksgerüst plus Graphit, wobei 30 bis 100, insbesondere 50 bis 70 % der MgO-Körner 1 über Sekundär-MgO-Sinterbrücken 2 miteinander versintert sind.

## Patentansprüche

1. Feuerfester, keramisch gebrannter, kohlenstoffgebundener Magnesiastein, dessen Matrix über 70 Gew.-% insbesondere von 80 bis 98 Gew.-% MgO - aus Perikles eine aus einer Verkokung von 2 bis 4 Gew.-% verkokbaren Bindemittel resultierende KoksgerüstBindematrix, Rest Graphit und/oder Nebenphasen und Poren aufweist, wobei
a) die Magnesiakörner über eine Kohlenstoffbindung des Koksgerüsts fixiert sind und
b) mindestens 30 %, insbesondere 50 bis 100 % der Primär-MgO-Körner mit jeweils mindestens einem anderen Primär - MgO-Korn über mindestens eine aus dem keramischen Brand resultierende Sekundär-MgO-Sinterbrücke miteinander versintert sind.

2. Magnesiastein nach Anspruch 1, **gekennzeichnet durch** einen Restkohlenstoffgehalt nach reduzierendem Glühen bei 1000° C (ASTM C 831-93) von mindestens 2, insbesondere von 5 bis 25 Gew.-%.

3. Magnesiastein nach Anspruch 2, **gekennzeichnet durch** einen Flockengraphitgehalt in der Koksgerüstbindematrix von mindestens 2 bis 25, insbesondere von 5 bis 20 Gew.-%.

4. Magnesiastein nach einem oder mehreren der Ansprüche 1 bis 3,
**dadurch gekennzeichnet, dass** das Koksgerüst keine bei Temperaturerhöhung bis 1200°c Kohlenwasserstoffe freisetzende Substanzen aufweist.

5. Magnesiastein nach einem oder mehreren der Ansprüche 1 bis 4, **dadurch gekennzeichnet, dass** im gebrannten Stein Nebenphasen wie Dicalciumsilikat, Calciumoxid, Dicalciumferrit oder Gangarten von Graphit in Mengen bis 5 Gew.-% vorhanden sind.

6. Magnesiastein nach einem der Ansprüche 1 bis 5,
**gekennzeichnet durch** eine Heißbiegefestigkeit zwischen 1,5 und 6, insbesondere zwischen 3 und 5 MPa.

7. Magnesiastein nach einem oder mehreren der Ansprüche 1 bis 6,
**gekennzeichnet durch** eine Kaltdruckfestigkeit zwischen 10 und 40, insbesondere zwischen 20 und 35 MPa.

8. Magnesiastein nach einem oder mehreren der Ansprüche 1 bis 7,
**gekennzeichnet durch** ein E-Modul zwischen 1 und 15, insbesondere zwischen 4 und 10 MPa.

9. Magnesiastein nach einem oder mehreren der Ansprüche 1 bis 8,
**gekennzeichnet durch** eine Porosität zwischen 5 und 20, insbesondere zwischen 8 und 15 Vol.-%.

10. Verfahren zur Herstellung eines Magnesiasteins, nach einem oder mehreren der Ansprüche 1 bis 9,
**gekennzeichnet durch** die folgenden Verfahrensschritte:
a) Herstellen eines Versatzes aus folgenden Bestandteilen:
72 bis 95 Gew.-% Magnesiagranulat aus Magnesiakörnern,
2 bis 4 Gew.-% verkokendes Bindemittel, insbesondere Pech oder Kunstharz,
0 bis 25, insbesondere 2 bis 14 Gew.-% Graphit, insbesondere Flockengraphit,
b) Formung eines Steinrohlings **durch** Pressen,
c) Tempern des Rohlings bei Temperaturen zwischen 150 und 600°C bis zur Verkokung des Bindemittel und Bildung einer Kohlenstoffbindung der Magnesiagranulatkörner,
d) keramisches Brennen der getemperten Rohlinge in reduzierender Atmosphäre über 1200, wobei die Brennbedingungen wie eine reduzierende Atmosphäre, eine Brenndauer und eine Temperaturführung so eingestellt werden, dass sich unter Einwirkung des vorhandenen Kohlenstoffs im Stein infolge von Redox-Reaktionen im gesamten Stein homogen verteilt dampfförmiges Magnesium aus Magnesia gemäß folgender Reaktion gebildet wird:
MgO + C → Mg + CO
und das dampfförmige Mg mit im Stein zur Verfügung stehenden Sauerstoff zu Sekundär-Magnesia oxidiert wird und sich unmittelbar an vorhandene Magnesiakörner anlagert und Sinterbrücken zwischen Magnesiakörnern bildet bis mindesten ,30%, insbesondere 50 bis 100% der vorhandenen Primär-Magnesiagranulatkörner mit jeweils mindestens einem anderen Primär-Magnesiagranulatkörner über mindestens eine Sinterbrücke aus Sekundär-Magnesia miteinander versintert sind.

11. Verfahren nach Anspruch 10,
**dadurch gekennzeichnet, dass** ein Magnesiagranulat mit Korngrößen bis 8 mm, insbesondere zwischen Mehlfeinheit und 6 mm verwendet wird.

12. Verfahren nach Anspruch 11,
**dadurch gekennzeichnet, dass** ein Magnesiagranulat mit folgenden Kornverteilungen der Magnesiakörner verwendet werden:
| **Korngrößen (mm)** | **Anteil (Gew.-%)** |
|---|---|
| 2-4 | 25-40 |
| 1-2 | 15-30 |
| 0,063-1 | 10-25 |
| < 0,063 | 15-30 |

13. Verfahren nach einem oder mehreren der Ansprüche 10 bis 12,
**dadurch gekennzeichnet, dass** keramisch gebrannt wird bis mehr als 50% Sekundär-Magnesiagranulatkörner vorliegen, die mehr als zwei Sekundär-Magnesiasinterbrücken aufweisen.

14. Verfahren nach einem oder mehreren der Ansprüche 10 bis 13,**dadurch gekennzeichnet, dass** das Tempern und das keramische Brennen in unmittelbarer Folge im selben Brennaggregat durchgeführt wird.

15. Verfahren nach einem oder mehreren der Ansprüche 10 bis 14,
**dadurch gekennzeichnet, dass** zwischen 1200 und 1500°C, insbesondere zwischen 1300 und 1400°C gebrannt wird.

16. Verfahren nach einem oder mehreren der Ansprüche 10 bis 15,
**dadurch gekennzeichnet, dass** folgende Versätze mit Pechbinder als Bindemittel verwendet werden:
83-95 Gew.-% Schmelzmagnesia (97,5 Gew.-% MgO-Gehalt)
2-14 Gew.-% Flockengraphit
2-4 Gew.-% Pechbinder

17. Verfahren nach einem oder mehreren der Ansprüche 10 bis 15,
**dadurch gekennzeichnet, dass** folgende Versätze mit Phenolarz als Bindemittel verwendet werden:
72-95 Gew.-% Schmelzmagnesia (97,5 Gew.-% MgO-Gehalt)
2-25 Gew.-% Flockengraphit
2-4 Gew.-% Phenolharz

18. Verfahren nach einem oder mehreren der Ansprüche 10 bis 17,
**dadurch gekennzeichnet, dass** mit Aufheizgeschwindigkeiten von 0,5 bis 5, insbesondere von 2 bis 3°C/Minute bis auf 1200 bis 1500°C, insbesondere bis auf 1300 bis 1400°C aufgeheizt wird.

19. Verfahren nach einem oder mehreren der Ansprüche 10 bis 18,
**dadurch gekennzeichnet, dass** bei der jeweiligen Brenntemperatur 2 bis 10, insbesondere 5 bis 6 Stunden gebrannt wird.

20. Verfahren nach einem oder mehreren der Ansprüche 10 bis 19,
**dadurch gekennzeichnet, dass**
mit Abkühlgeschwindigkeiten zwischen 0,5 und 5, insbesondere zwischen 2 und 3°C/Minute abgekühlt wird.

## Claims

1. A fire-proof, ceramically fired, carbon-bonded magnesia brick, the matrix of which has more than 70 % by weight, in particular from 80 to 98 % by weight of MgO grains of periclase and a coke-structure binding matrix resulting from coking from 2 to 4 % by weight of cokable binding agent, the remainder being graphite and/or secondary phases and pores, wherein
a) the magnesia grains are fixed by way of a carbon bond of the coke structure, and
b) at least 30 %, in particular from 50 to 100 % of the primary MgO grains, are sintered together with at least one other primary MgO grain in each case by way of at least one secondary MgO sintering bridge resulting from the ceramic firing.

2. A magnesia brick according to Claim 1, **characterized by** a residual carbon content after reducing annealing at 1000°C (ASTM C 831-93) of at least 2 % by weight, in particular from 5 to 25 % by weight.

3. A magnesia brick according to Claim 2, **characterized by** a content of flaked graphite in the coke-structure binding matrix of at least from 2 to 25 % by weight, and in particular from 5 to 20 % by weight.

4. A magnesia brick according to one or more of Claims 1 to 3, **characterized in that** the coke structure has no substances which release hydrocarbons when the temperature is increased to 1200°C.

5. A magnesia brick according to one or more of Claims 1 to 4, **characterized in that** secondary phases such as dicalcium silicate, calcium oxide, dicalcium ferrite or gangues of graphite in quantities of up to 5 % by weight are present in the fired brick.

6. A magnesia brick according to any one of Claims 1 to 5, **characterized by** a hot bending strength of between 1-5 and 6 MPa, in particular between 3 and 5 MPa.

7. A magnesia brick according to one or more of Claims 1 to 6, **characterized by** a cold compression strength of between 10 and 40 MPa, in particular between 20 and 35 MPa.

8. A magnesia brick according to one or more of Claims 1 to 7, **characterized by** an elasticity modulus of between 1 and 15 MPa, in particular between 4 and 10 MPa.

9. A magnesia brick according to one or more of Claims 1 to 8, **characterized by** a porosity of between 5 and 20 % by volume, in particular between 8 and 15 % by volume.

10. A method of producing a magnesia brick according to one or more of Claims 1 to 9, **characterized by** the following method steps:
a) preparation of a blend of the following constituents
- from 72 to 95 % by weight of magnesia granulate from magnesia grains,
- from 2 to 4 % by weight of coking binding agent, in particular pitch or synthetic resin,
- from 0 to 25 % by weight, in particular from 2 to 14 % by weight, of graphite, in particular flaked graphite,
b) formation of a brick blank by pressing,
c) tempering of the blank at temperatures of between 150 and 600°C until the coking of the binding agent and the formation of a carbon bond of the magnesia-granulate grains,
d) ceramic firing of the tempered blanks in a reducing atmosphere above 1200[°C], wherein the firing conditions such as a reducing atmosphere, the duration of firing and the temperature control are set in such a way that, under the action of the carbon existing in the brick, vaporous magnesium is formed from magnesia in a manner distributed homogeneously in the brick as a whole as a result of redox reactions in accordance with the following reaction:
MgO + C → Mg + CO
and the vaporous Mg is oxidized with oxygen available in the brick to form secondary magnesia and accumulates directly on existing magnesia grains and forms sintering bridges between magnesia grains until at least 30 %, in particular from 50 to 100 %, of the existing primary magnesia-granulate grains are sintered together with at least one other primary magnesia-granulate grain in each case by way of at least one sintering bridge of secondary magnesia.

11. A method according to Claim 10, **characterized in that** a magnesia granulate with grain sizes of up to 8 mm, in particular between as fine as flour and 6 mm, is used.

12. A method according to Claim 11, **characterized in that** a magnesia granulate with the following distributions of the magnesia grains [is] used:
| **grain size (mm)** | **proportion (% by weight)** |
|---|---|
| 2 to 4 | 25 to 40 |
| 1 to 2 | 15 to 30 |
| 0·063 to 1 | 10 to 25 |
| < 0·063 | 15 to 30. |

13. A method according to one or more of Claims 10 to 12, **characterized in that** firing is carried out ceramically until more than 50 % of secondary magnesia-granulate grains are present which have more than two secondary magnesia sintering bridges.

14. A method according to one or more of Claims 10 to 13, **characterized in that** the tempering and the ceramic firing are carried out in a direct sequence in the same firing unit.

15. A method according to one or more of Claims 10 to 14, **characterized in that** firing is carried out at between 1200 and 1500°C, in particular at between 1300 and 1400°C.

16. A method according to one or more of Claims 10 to 15, **characterized in that** the following blends are used with pitch binder as a binding agent:
- from 83 to 95 % by weight of fused magnesia (97-5 % by weight of Mg0 content)
- from 2 to 14 % by weight of flaked graphite
- from 2 to 4 % by weight of pitch binder.

17. A method according to one or more of Claims 10 to 15, **characterized in that** the following blends are used with phenol resin as a binding agent:
- from 72 to 95 % by weight of fused magnesia (97·5 % by weight of Mg0 content)
- from 2 to 25 % by weight of flaked graphite
- from 2 to 4 % by weight of phenol resin.

18. A method according to one or more of Claims 10 to 17, **characterized in that** heating is carried out at heating rates of from 0·5 to 5°C / minute, in particular from 2 to 3°C / minute, up to 1200 to 1500°C, in particular up to 1300 to 1400°C.

19. A method according to one or more of Claims 10 to 18, **characterized in that** firing is carried out for 2 to 10 hours, in particular for 5 to 6 hours, at the respective firing temperature.

20. A method according to one or more of Claims 10 to 19, **characterized in that** cooling is carried out at cooling rates of between 0·5 to 5°C / minute, in particular between 2 to 3°C / minute.

## Revendications

1. Brique de magnésie réfractaire à cuisson céramique, liée par du carbone, dont la matrice comporte plus de 70 % en poids, en particulier de 80 à 98 % en poids de grains de MgO en périclase, ainsi qu'une matrice de liaison à squelette de coke résultant d'une cokéfaction de 2 à 4 % en poids de liant cokéfiable, le reste comportant du graphite et/ou des phases annexes et des pores, dans laquelle
a) les grains de magnésie sont fixés par une liaison carbone du squelette de coke, et
b) au moins 30 %, en particulier 50 à 100 % des grains de MgO primaires sont frittés chacun avec au moins un autre grain de MgO primaire par l'intermédiaire d'au moins un pont de frittage de MgO secondaire résultant de la cuisson céramique.

2. Brique de magnésie selon la revendication 1, **caractérisée par** une teneur résiduelle en carbone d'au moins 2, en particulier de 5 à 25 % en poids après une cuisson réductrice à 1000 °C (ASTM C 831-93).

3. Brique de magnésie selon la revendication 2, **caractérisée par** une teneur en graphite en flocons, dans la matrice de liaison à squelette en coke, d'au moins 2 à 25, en particulier de 5 à 20 % en poids.

4. Brique de magnésie selon l'une quelconque ou plusieurs des revendications 1 à 3, **caractérisée en ce que** le squelette de coke ne comporte pas de substances dégageant des hydrocarbures lors d'une augmentation de température jusqu'à 1200 °C.

5. Brique de magnésie selon l'une quelconque ou plusieurs des revendications 1 à 4, **caractérisée en ce que** des phases annexes comme du silicate de dicalcium, de l'oxyde de calcium, de la ferrite dicalcique ou des variétés de graphite sont présentes en quantités jusqu'à 5 % en poids dans la brique cuite.

6. Brique de magnésie selon l'une quelconque des revendications 1 à 5, **caractérisée par** une résistance à la flexion à chaud entre 1,5 et 6, en particulier entre 3 et 5 MPa.

7. Brique de magnésie selon l'une quelconque ou plusieurs des revendications 1 à 6, **caractérisée par** une résistance à la pression à froid entre 10 et 40, en particulier entre 20 et 35 MPa.

8. Brique de magnésie selon l'une quelconque ou plusieurs des revendications 1 à 7, **caractérisée par** un module d'élasticité entre 1 et 15, en particulier entre 4 et 10 MPa.

9. Brique de magnésie selon l'une quelconque ou plusieurs des revendications 1 à 8, **caractérisée par** une porosité entre 5 et 20, en particulier entre 8 et 15 % en volume.

10. Procédé pour la fabrication d'une brique de magnésie selon l'une quelconque ou plusieurs des revendications 1 à 9, **caractérisé par** les étapes de procédé suivantes :
a) préparation d'un mélange en les composants suivants :
72 à 95 % en poids de granulé de magnésie en grains de magnésie,
2 à 4 % en poids de liant cokéfiant, en particulier de poix ou de résine synthétique,
0 à 25, en particulier 2 à 14 % en poids de graphite, en particulier de graphite floculé,
b) moulage d'une brique crue par pressage,
c) conditionnement thermique de la brique crue à des températures entre 150 et 600 °C jusqu'à cokéfaction du liant et formation d'une liaison carbone des grains de magnésie granulée,
d) cuisson céramique des briques crues conditionnées thermiquement sous atmosphère réductrice au-dessus de 1200 °C, les conditions de cuisson, telles une atmosphère réductrice, une durée de cuisson et une variation de la température, étant ajustées de telle sorte que dans la brique, par suite de réactions redox sous l'effet du carbone présent, de la vapeur de magnésium répartie de façon homogène est formée dans l'ensemble de la brique à partir de la magnésie d'après la réaction suivante :
MgO + C → Mg + CO
et la vapeur de Mg est oxydée en magnésie secondaire avec l'oxygène disponible dans la brique et se dépose directement sur les grains de magnésie existants et forme des ponts de frittage entre les grains de magnésie, jusqu'à ce qu'au moins 30 %, en particulier 50 à 100 % des grains primaires présents de magnésie granulée soient frittés ensemble, chacun avec au moins un autre grain primaire de magnésie granulée, par au moins un pont de frittage en magnésie secondaire.

11. Procédé selon la revendication 10, **caractérisé en ce que**
l'on utilise un granulé de magnésie avec des tailles de grain jusqu'à 8 mm, en particulier entre la finesse de la farine et 6 mm.

12. Procédé selon la revendication 11, **caractérisé en ce que**
l'on utilise un granulé de magnésie avec la répartition granulométrique suivante des grains de magnésie :
| **Taille de grain (mm)** | **Proportion (% en poids)** |
|---|---|
| 2 à 4 | 25 à 40 |
| 1 à 2 | 15 à 30 |
| 0,063 à 1 | 10 à 25 |
| < 0,063 | 15 à 30 |

13. Procédé selon l'une quelconque ou plusieurs des revendications 10 à 12, **caractérisé en ce que**
l'on poursuit la cuisson céramique jusqu'à ce qu'il y ait plus de 50 % de grains de magnésie secondaire, qui présentent plus de deux ponts de frittage en magnésie secondaire.

14. Procédé selon l'une quelconque ou plusieurs des revendications 10 à 13, **caractérisé en ce que**
le conditionnement thermique et la cuisson céramique sont effectués directement l'un après l'autre dans la même unité de cuisson.

15. Procédé selon l'une quelconque ou plusieurs des revendications 10 à 14, **caractérisé en ce que**
la cuisson s'effectue entre 1200 et 1500 °C, en particulier entre 1300 et 1400 °C.

16. Procédé selon l'une quelconque ou plusieurs des revendications 10 à 15, **caractérisé en ce que**
l'on utilise les mélanges suivants avec un liant en poix comme liant :
83 à 95 % en poids de magnésie de fusion (teneur en MgO 97,5 % en poids)
2 à 14 % en poids de graphite en flocons
2 à 4 % en poids de liant en poix.

17. Procédé selon l'une quelconque ou plusieurs des revendications 10 à 15, **caractérisé en ce que**
l'on utilise les mélanges suivants avec de la résine phénolique comme liant :
72 à 95 % en poids de magnésie de fusion (teneur en MgO 97,5 % en poids)
2 à 25 % en poids de graphite en flocons
2 à 4 % en poids de résine phénolique.

18. Procédé selon l'une quelconque ou plusieurs des revendications 10 à 17, **caractérisé en ce que**
l'on chauffe à des vitesses de chauffage de 0,5 à 5, en particulier de 2 à 3 °C/minute jusqu'à 1200 à 1500 °C, en particulier jusqu'à 1300 à 1400 °C.

19. Procédé selon l'une quelconque ou plusieurs des revendications 10 à 18, **caractérisé en ce que**
l'on cuit à la température respective pendant 2 à 10, en particulier pendant 5 à 6 heures.

20. Procédé selon l'une quelconque ou plusieurs des revendications 10 à 19, **caractérisé en ce que**
l'on refroidit à des vitesses de refroidissement entre 0,5 et 5, en particulier entre 2 et 3 °C/minute.
